# EUROPÄISCHE PATENTSCHRIFT

(11) **EP 0 505 717 B1**
(45) Veröffentlichungstag und Bekanntmachung des Hinweises auf die Patenterteilung: **29.07.1998**
(21) Anmeldenummer: 92102575.5
(22) Anmeldetag: 15.02.1992
(51) Int. Cl.: G01S 17/46

(54) **Verfahren und Vorrichtung zur optischen Messung von Distanzen**
Method and apparatus for optically measuring distance
Procédé et dispositif de mesure optique de la distance

(30) Priorität: 25.03.1991 DE 4110187; 06.09.1991 DE 4129702
(43) Veröffentlichungstag der Anmeldung: 30.09.1992
(73) Patentinhaber: Heidelberger Druckmaschinen Aktiengesellschaft, 69115 Heidelberg (DE)
(72) Erfinder: Buck, Helmut, W-6905 Schriesheim (DE); Bergann, Ludwig, Dr., W-1000 Berlin 31 (DE)
(74) Vertreter: Fey, Hans-Jürgen

(56) Entgegenhaltungen:
- EP-A- 0 405 423
- GB-A- 2 219 709
- STAHL UND EISEN Bd. 111, Nr. 7, 15. Juli 1991, Düsseldorf, DE, SS 25-33; H.J. SCHÄFER ET AL.: 'Stand der berührungsfreien Messung von Geschwindigkeiten, Längen und Profilen'

## Beschreibung

Die Erfindung betrifft ein Verfahren und eine Vorrichtung zur optischen Messung der Entfernung von Objekten voneinander mittels optischer Triangulation.

Bei einem solchen Verfahren wird zur Entfernungsmessung das interessierende Objekt mit optischer Strahlung mittels eines Senders bestrahlt und die Winkelbeziehung der vom Objekt zurückgestreuten Strahlung vom Sensor mit einer positionsempfindlichen Photoempfangsanordnung ausgewertet.

Bei einer Vielzahl von Anwendungsfällen ist bei der Entfernungsmessung von Objekten weniger die absolute Entfernung interessant, als vielmehr die relative Lage von beispielsweise zwei Objekten zueinander.

Dies ergibt sich bei Positionier- und Nachführaufgaben in der Stahlindustrie, bei Verpackungsmaschinen, in der Papier- und Druckindustrie, im Bauwesen etc. Wird z. B. an einer Druckmaschine während des Maschinenlaufs ein neuer Papierstapel mit einem Hilfsstapel vereinigt, so muß auch hier die relative Lage von beiden gemessen und der neue Papierstapel positioniert werden.

Für derartige Aufgaben werden bekannte optische Triangulationssensoren und Stellmittel eingesetzt, wobei die relative Lage zweier Objekte aus der Differenz der Ausgangssignale zweier solcher Sensoren ermittelt wird. Entscheidender Nachteil eines solchen Vorgehens ist, daß Meßfehler, die unabhängig in beiden Sensoren auftreten, zu einer erheblichen Vergrößerung der Meßfehler führen und unter Umständen den Einsatz dieser Meßmethode unmöglich machen.

Insbesondere müssen von derartigen Geräten sehr guter Kennliniengleichlauf und besonders geringe Drift- und Alterungserscheinungen gefordert werden, was die Geräte sehr aufwendig macht und in vielen Fällen an physikalische Grenzen stoßen läßt.

Es ist ein Verfahren und eine Meßvorrichtung (GB 22 19 709 A) bekannt, bei denen Entfernungsmessungen verschiedener Objekte bzw. Objektpunkte in einem Gerät mit mehreren Senderlichtbündeln und einem gemeinsamen positionsempfindlichen Photoempfänger zur Driftunterdrückung und Aufwandsminimierung der Auswerteschaltung realisiert wurden. Nachteilig bei diesem Verfahren ist jedoch, daß die zueinander divergenten Senderlichtbündel bei Entfernungsänderung zu einer Verlagerung der Meßpunkte auf den Objekten führen, was den möglichen Meßbereich einengt bzw. eine sinnvolle Messung unmöglich machen kann, wie bei dem genannten Beispiel der Vereinigung von Druckbogenstapeln.

Dieser Nachteil ist bei einem weiteren bekannten Verfahren (DE-OS 35 02 634) behoben, das mit separaten Sender incl. Senderoptik arbeitet und so zueinander parallele Senderlichtbündel ermöglicht. Beiden Verfahren ist jedoch gemeinsam, daß die von den jeweiligen Sender- bzw. Empfängerlichtbündeln aufgespannten Triangulationsebenen in einer gemeinsamen Ebene liegen. Dadurch fallen die Abbildungen der Empfängerlichtbündel bei gleichem Abstand der Meßobjekte vom Meßgerät, d. h. bei einem Relativabstand- bzw. der Entfernungsdifferenz- "Null" der Objekte, auf verschiedene Punkte des positionsempfindlichen Photoempfängers.

Der Erfindung liegt daher die Aufgabe zugrunde, ein Meßverfahren anzugeben und eine Vorrichtung zu schaffen, mit der der relative Abstand zweier Objekte auf optischem Wege genau erfaßt werden kann, weitgehend unabhängig vom absoluten Abstand beider vom Meßgerät, und bei der eine einfache und genaue Zusammenführung der beiden Objekte erreicht wird.

Dieses Ziel sollte außerdem mit deutlich geringerem Aufwand erreicht werden, als bei der Verwendung zweier bekannter Abstandssensoren und ferner mit besserer Genauigkeit der Abstandsdifferenz.

Erfindungsgemäß wird dieses Ziel durch die kennzeichnenden Merkmale der Ansprüche 1 und 3 erreicht. Insbesondere die Vereinigung zweier Triangulationssensoren in einem Gerät, so daß die Entfernungsmessung beider Meßobjekte zwar mit zwei Senderlichtbündeln erfolgt, die Lagebestimmung aber mit nur einem positionsempfindlichen System ausgeführt wird. Zu diesem Zweck werden die empfängerseitigen Strahlengänge über Spiegel so ausgeführt, daß beide auf ein- und dieselbe positionsempfindliche Empfangsanordnung gelangen, die entweder als Doppeldiodenanordnung, PSD (Positon Sensitive Detector) oder auch als CCD-Zeile ausgeführt sein kann. Die Zuordnung der Meßwerte beider Tastobjekte wird durch abwechselndes Zuschalten der Strahlungssender und dazu synchrone übergabe der Meßwerte (Synchrondemodulator) an einen Differenzbildner. Es ist dadurch neben den Entfernungsmeßsignalen der Objekte die Ausgabe eines hochgenauen Differenzentfernungsssignals möglich. Die in derartigen Meßgeräten dominierenden Meßfehler, wie differierende Kennliniennichtlinearitäten, thermische und alterungsbedingte Drifterscheinungen sind somit weitgehend ausgeschaltet, da nur e i n einziger elektronischer Meßkanal benutzt wird. Fehler durch mechanische Unstabilitäten des optischen Aufbaues lassen sich durch geeignete Konstruktion und Werkstoffwahl genügend klein halten.

Remissionsgradänderungen der Objekte, unterschiedliche Transmission der optischen Strahlengänge (Verschmutzung, Erblindung optischer Oberflächen, Leistungseinbuße der Sender) werden durch die Auswertung über **einen** Meßkanal ebenfalls eleminiert (Quotientenbildung).

Neben den genannten technischen Vorteilen bietet die erfindungsgemäße Lösung auch wirtschaftliche, verglichen mit der Verwendung zweier separater optischer Abstandssensoren. Der elektronische Aufwand verringert sich bei bedeutend verbesserter Meßgenauigkeit auf fast die Hälfte, .während an optischen Bauelementen lediglich vier kostengünstige Oberflächenspiegel hinzukommen.

Mit der erfindungsgemäßen Vorrichtung zur Durchführung des Verfahrens wird ein einfacher Aufbau der Sensoreinheit erreicht, die lediglich ein Stellsignal erzeugt, das unmittelbar zur Positionierung der zusammenzuführenden Objekte benutzt werden kann. Insbesondere beim Zusammenführen von zwei Stapeln, z. B. aus Papier, in einer Verarbeitungsmaschine kann eine genaue Positionierung der beiden Stapel zueinander erreicht werden, die ein störungsloses Arbeiten der Maschine gewährleistet, ohne daß in der Verarbeitung Ungenauigkeiten auftreten.

Nachfolgend wird die Erfindung anhand der Figuren 1 bis 5 beispielsweise beschrieben.
- Figur 1: zeigt das Wirkprinzip der Signalverarbeitung. Von einer Taktgeberschaltung 7 werden über Treiberschaltungen 5, 6 Strahlungssender 3, 4, vorzugsweise Halbleiterstrahler wie LED, IRED oder Laserdioden, im zeitlichen Wechsel angesteuert.

Figuren 2 und 3 zeigen schematische Darstellungen der Signalverarbeitung (Figur 3 ist eine um 90° gedrehte Darstellung von Figur 1).

Figuren 4 und 5 zeigen Vorrichtungen zum Durchführen des Verfahrens.

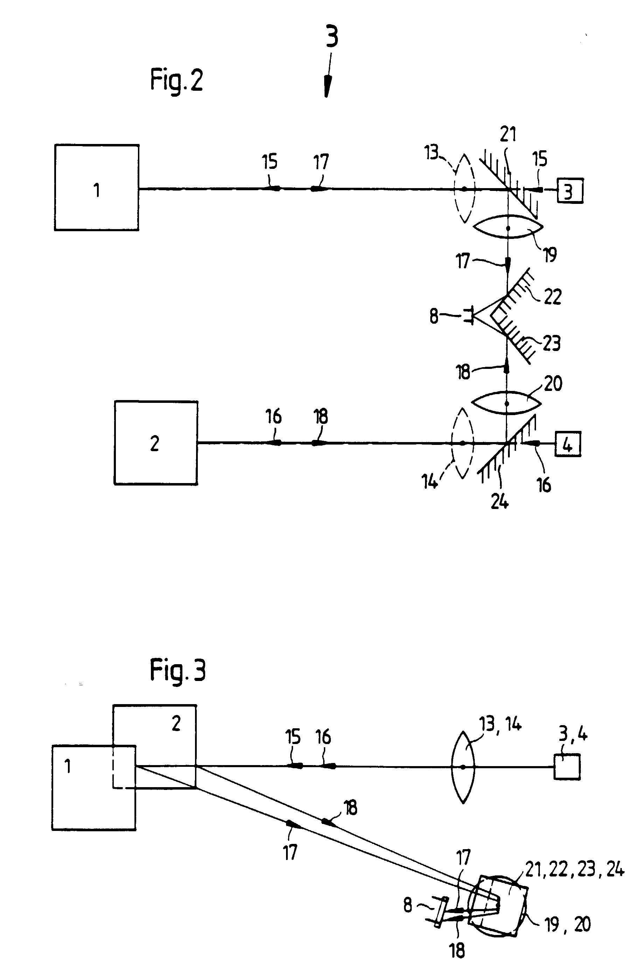

Die Triangulationsebene liegt in der Zeichenebene von Figur 3.

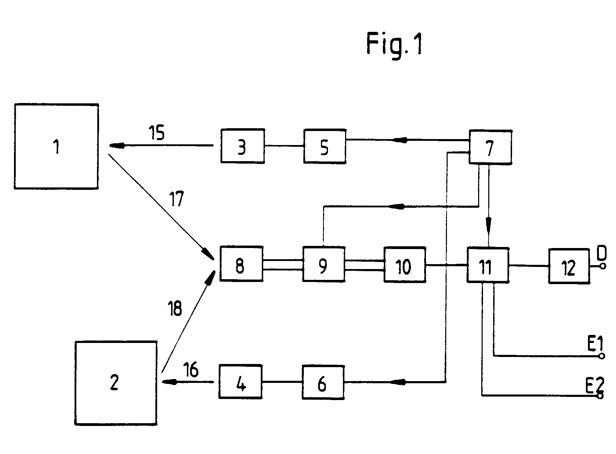

Wie in Figur 1 wiedergegeben, sind den beiden Objekten 1, 2 Strahlungssender 3, 4 zugeordnet, die zwei Strahlen 15, 16 aussenden, die wiederum als Signale 17, 18 von einem Empfänger 8 empfangen werden. über Treiberschaltungen 5, 6 werden die beiden Strahlungssender 3, 4 in zeitlichem Wechsel angesteuert. Der Taktgeber 7 liefert hierzu den zeitlichen Takt.

Auf den Empfänger 8 folgen Verstärker und Synchrondemodulator 9 sowie Quotientenbildner 10 zur Unterdrückung von Fremdlicht, Senderalterung, Remissionsgradänderungen und Verschmutzung sowie zur Kennlinienentzerrung. Diese Komponenten wirken auf beide Signale 17, 18 in gleicher Weise, so daß ihr Driftverhalten kompensiert ist. Der nachfolgende Synchrondemodulator 11 wird vom Senderumschalttakt gesteuert, und seine Ausgangsspannung entspricht der Differenz der einzelnen Entfernungssignalspannungen E1 und E2. Ein Tiefpaß 12 dient der Unterdrückung des Senderumschalttaktes in der Differenzsignalspannung D.

Zweck der Spiegelanordnung 22, 23 ist, daß sich die über Linsen 13, 14, 19, 20 fokusierbaren und über Spiegel 21, 24 umlenkbaren Empfangsbündel 17, 18 in der Projektion auf Figur 2 in der Empfängerebene 8 schneiden, während sie sich bei Variation des Objektabstandes in der Zeichenebene Figur 3 auf der Empfängerlängsachse bewegen. Daher liegen die Schwerpunkte der Abbildungen in Abhängigkeit von der Entfernung der Objekte 1, 2 auf unterschiedlichen Punkten der Empfängerlängsachse 8 (Figur 3). Sie bewirken entsprechend dieser Lagedifferenzen unterschiedliche Signale an den Empfängerausgängen, die einer Signalverarbeitung unterworfen werden mit dem Ziel, am Ausgang ein n u r der Entfernungsdifferenz der Tastobjekte proportionales Signal (in analoger oder digitaler Form) zu erhalten.

In einer weiteren Ausführung des Auswertesystems kann ein Teil der Verarbeitungselektronik (Komponenten 7, 9, 10, 11, 12) durch eine Mikroprozessorensteuerung ersetzt werden, die die Signalwerte digital verarbeitet und durch eine Lernphase nach der ersten Inbetriebnahme (spezielle Systemparameter werden auf ROM gespeichert) stabile Restfehler noch weiter verringert. Der Meßwert D steht dann direkt als digitales Äquivalent zur Verfügung.

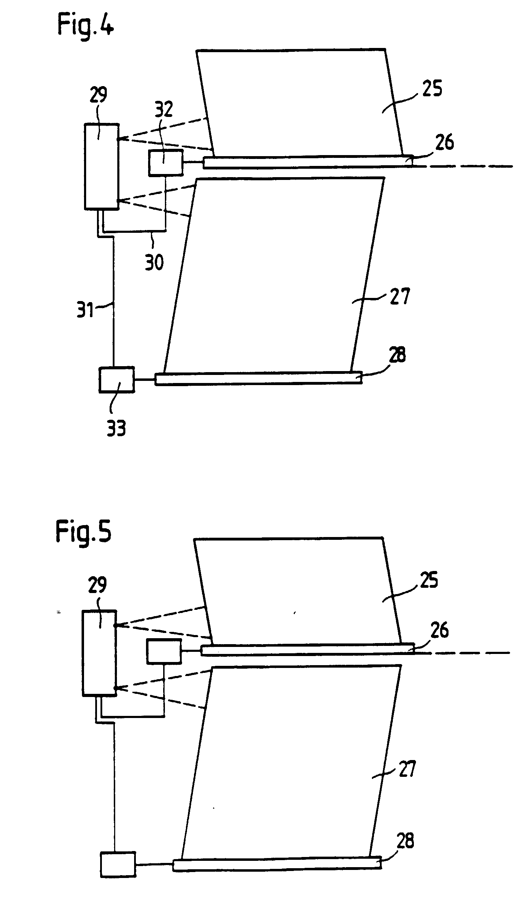

Figur 4 zeigt schematisch ein Anwendungsbeispiel bei einer Druckmaschine, bei der ein Hilfsstapel 25 auf einer Hilfsstapeleinrichtung 26 gelagert ist, wobei jeweils die obersten Papierbogen von dem Hilfsstapel entnommen und der Druckmaschine zugeführt werden. Unterhalb des Hilfsstapels 25 ist ein neuer Papierstapel 27 gezeigt, der auf einer Stapelhubeinrichtung 28 abgelegt ist. In der Sensor- und Steuereinheit 29 sind die in den Figuren 1 bis 3 beschriebenen Komponenten enthalten. Die Meßwerte D werden hier in Steuersignale verarbeitet, die über die Zuleitungen 30, 31 Stellmotoren 32, 33 zugeführt werden. Hierbei ist der Stellmotor 32 der Hilfsstapeleinrichtung 26 und der Stellmotor 33 der Stapelhubeinrichtung 28 zugeordnet. In Figur 4 ist übertrieben wiedergegeben, daß der Hilfsstapel 25 und der neue Papierstapel 27 in unterschiedlichen Richtungen schräg aufgesetzt sind. Nach Verarbeitung der Meßsignale sind gemäß Figur 5 die beiden Stapel 25, 27 seitlich so ausgerichtet, daß die untere Fläche des Hilfsstapels 25 und die obere Fläche des neuen Papierstapels 27 übereinstimmen. Beim Auflegen des Hilfsstapels 25 auf den neuen Papierstapel 27 und beim Weiterverarbeiten der oberen Lagen Papierbogen entsteht im Bereich der Auflageebene zwischen beiden Stapeln kein plötzlicher Seitenversatz, der die Steuer- und Regelung der Druckmaschine belasten würde.

## Patentansprüche

1. Verfahren zur optischen Messung der Entfernung von Objekten und speziell der Entfernung zweier Objekte voneinander mittels optischer Triangulation mit zwei separaten Strahlungssendern (3, 4), die in zeitlichem Wechsel angesteuert werden und die zu messenden Objekte bestrahlen,
**dadurch gekennzeichnet,**
daß die Senderbündel mit den jeweiligen Empfängerachsen Triangulationsebenen (15, 17, 16, 18) aufspannen, daß durch weitere optische Mittel, die empfangenen Strahlungsbündel (17, 18) auf ein und dieselbe positionsempfindliche Photoempfängeranordnung (8) im zeitlichen Wechsel abgebildet werden und die Lage des Abbildungsschwerpunktes auf der Empfängeranordnung (8) ein Maß für die Entfernung des jeweiligen Objektes von der Vorrichtung darstellt bzw. die Lagedifferenzen beider Abbildungen ein Maß für den Relativabstand der Objekte und daß nur eines einziger elektronischer Auswertekanals benutzt wird, wobei Gleichlauf- und Driftfehlern unterdrückt werden.

2. Verfahren nach Anspruch 1,
**dadurch gekennzeichnet,**
daß eine genaue Absolutentfernungsmessung eines Objektes auf eine Differenzentfernungsmessung zwischen dem Objekt und einem zweiten Objekt, dessen Entfernung genau bekannt ist und als Referenz dient, zurückgeführt wird.

3. Vorrichtung zur optischen Messung der Entfernung von Objekten und speziell der Entfernung zweier Objekte voneinander mittels optischer Triangulation die zwei separate im zeitlichen Wechsel angesteuerte Strahlungssender (3, 4) aufweisen und die zu messenden Objekte bestrahlen,
**dadurch gekennzeichnet,**
daß die Senderbündel mit der jeweiligen Empfängerachse eine Triangulationsebene (15, 17, 16, 18) aufspannen, daß die Vorrichtung weitere optische Mittel und eine Photoempfängeranordnung (8) umfaßt, wobei die empfangenen Strahlungsbündel (17, 18) auf dieselbe positionsempfindliche Photoempfängeranordnung (8) im selben zeitlichen Wechsel abgebildet werden und die Lage des Abbildungsschverpunktes auf der Empfängeranordnung (8) ein Maß für die Entfernung des jeweiligen Objektes von der Vorrichtung darstellt bzw. die Lagedifferenzen beider Abbildungen ein Maß für den Relativabstand der Objekte und nur ein einziger elektronischer Auswertekanal vorgesehen ist, wobei Gleichlauf- und Driftfehler unterdrückt werden.

4. Vorrichtung nach Anspruch 3,
**dadurch gekennzeichnet,**
daß Stellmittel vorgesehen sind,
daß als Sender LED, IRED oder Halbleiterlaser und als Empfängeranordnung Doppelphotodioden,ein positionsempfindlicher Empfänger (PSD) oder eine CCD-Zeile eingesetzt sind, die ein Differenzentfernungssignal erzeugen, das den Stellmitteln zugeleitet wird, die die zusammenzuführenden Objekte in ihrer Lage zueinander verstellen, so daß beide Berührungsflächen übereinstimmen.

5. Vorrichtung nach Anspruch 4,
**dadurch gekennzeichnet,**
daß für die Auswertung des Differenzentfernungssignals eine Mikroprozessorsteuerung eingesetzt ist, die durch Lernen individuelle Restfehler der Vorrichtung kompensiert.

6. Anwendung der Vorrichtung nach Anspruch 4 für eine Druckmaschine, wobei die zusammenzuführenden Objekte ein Hilfsstapel (25) und ein neuer Papierstapel (27) sind, denen die Stellmittel zugeordnet sind, über die die seitlichen Lagen der Stapel (25, 27) zueinander veränderbar sind, und daß das Differenzentfernungssignal (17, 18) bis zur Zusammenführung der beiden Stapel (25, 27) über eine Steuereinheit (29) die beiden Stellmittel derart steuert, daß die untere Fläche des Hilfsstapels (25) mit der oberen Fläche des neuen Papierstapels (27) übereinstimmt.

## Claims

1. Method for optically measuring the distance of objects, and especially the distance of two objects from one another by means of optical triangulation using two separate radiation emitters (3, 4) which are driven in temporal alternation and irradiate the objects to be measured, characterized in that
the emitter beams define triangulation planes (15, 17, 16, 18) with the respective detector axes, in that by further optical means, the received radiation beams (17, 18) are imaged onto one and the same position-sensitive photoelectric detector arrangement (8) in temporal alternation and the position of the centre of gravity of the image on the detector arrangement (8) represents a measure of the distance of the respective object from the apparatus, and, respectively, the difference in the positions of the two images represents a measure of the relative distance of the objects, and in that only a single electronic evaluation channel is used, synchronization errors and drift errors being suppressed.

2. Method according to Claim 1, characterized in that a precise measurement of the absolute distance of an object is referred back to a measurement of the differential distance between the object and a second object, the distance of which is precisely known and serves as reference.

3. Apparatus for optically measuring the distance of objects, and especially the distance of two objects from one another by means of optical triangulation using two separate radiation emitters (3, 4), which are driven in temporal alternation and irradiate the objects to be measured, characterized in that
the emitter beams define a triangulation plane (15, 17, 16, 18) with the respective detector axis, in that the apparatus comprises further optical means and a photoelectric detector arrangement (8), the received radiation beams (17, 18) being imaged onto the same position-sensitive photoelectric detector arrangement (8) in the same temporal alternation, and the position of the centre of gravity of the image on the detector arrangement (8) representing a measure of the distance of the respective object from the apparatus, and, respectively, the difference in the positions of the two images representing a measure of the relative distance of the objects, and only a single electronic evaluation channel being provided, synchronization errors and drift errors being suppressed.

4. Apparatus according to Claim 3, characterized in that actuators are provided, and in that the emitters employed comprise LED, IRED or semiconductor lasers and the detector arrangement employed comprises dual photodiodes, a position-sensitive detector (PSD) or a CCD line, which generate a differential-distance signal which is passed to the actuators, which generate the differential-distance signal which is passed to the actuators, which displace the objects to be brought into conjunction in their position relative to one another, so that the two contact surfaces coincide.

5. Apparatus according to Claim 4, characterized in that a microprocessor control which, by learning, compensates individual residual errors of the apparatus, is used for evaluating the differential-distance signal.

6. Application of the apparatus according to Claim 4 for a printing machine, the objects to be brought into conjunction being an auxiliary stack (25) and a new paper stack (27), to which stacks (25, 27) the actuators are assigned by means of which the lateral positions of the stacks (25,27) relative to one another can be altered, and in that the differential-distance signal (17, 18) controls the two actuators, by means of a control unit (29), until the two stacks (25, 27) have been brought into conjunction, in such a way that the lower surface of the auxiliary stack (25) coincides with the upper surface of the new paper stack (27).

## Revendications

1. Procédé de mesure optique de la distance séparant des objets et spécialement de la distance séparant deux objets l'un de l'autre par triangulation optique au moyen de deux émetteurs séparés de radiation (3, 4) qui sont attaqués en alternance dans le temps et qui irradient les objets sur lesquels les mesures sont effectuées,
caractérisé
en ce que les faisceaux d'émission établissent des plans de triangulation (15, 17, 16, 18) avec les axes respectifs de réception, en ce que d'autres moyens optiques reproduisent les faisceaux reçus de radiation (17, 18) en alternance dans le temps sur un seul et même système photo-récepteur (8) sensible à la position et la position du centre de gravité de la reproduction sur le système récepteur (8) représente une mesure de la distance de l'objet particulier au dispositif et la différence de position des deux reproductions représente une mesure de la distance relative des objets et en ce que seul un unique canal électronique d'analyse est utilisé de manière que les erreurs de synchronisme et de dérive soient inhibées.

2. Procédé selon la revendication 1.
caractérisé
en ce qu'une mesure précise de distance absolue d'un objet est réduite à une mesure de différence des distances entre l'objet et un deuxième objet dont la distance est connue avec précision et sert de référence.

3. Dispositif de mesure optique de la distance séparant des objets et spécialement de la distance séparant deux objets par triangulation optique, qui comprend deux émetteurs séparés de radiation (3. 4) qui sont attaqués en alternance dans le temps et qui irradient les objets sur lesquels les mesures doivent être effectuées,
caractérisé
en ce que les faisceaux d'émission établissent avec l'axe respectif de réception un plan de triangulation (15, 17, 16, 18), en ce que le dispositif comprend d'autres moyens optiques et un système photo-récepteur (8), les faisceaux reçus de radiation (17, 18) étant reproduits avec la même alternance dans le temps sur le même système photo-récepteur (8) sensible à la position et la position du centre de gravité de la reproduction sur le système récepteur (8) représente une mesure de la distance de l'objet respectif au dispositif et la différence de position des deux reproductions représente une mesure de la distance relative des objets et seul un unique canal électronique d'analyse est prévu de manière à inhiber les erreurs de synchronisme et de dérive.

4. Dispositif selon la revendication 3.
caractérisé
en ce que des organes de commande sont prévus,
en ce que les émetteurs utilisés sont des LED, des IRED ou des lasers à semi-conducteurs et le système récepteur utilisé consiste en des photo-diodes doubles, un récepteur sensible à la position (PLD) ou une ligne de CCD, qui génèrent un signal de différence de distances qui est dirigé sur les organes de commande qui décalent la position relative des objets à assembler de manière que les deux surfaces de contact coïncident.

5. Dispositif selon la revendication 4.
caractérisé
en ce qu'une commande à micro-processeur qui est utilisée pour l'analyse du signal de différence de distances compense par auto-apprentissage les erreurs résiduelles individuelles du dispositif.

6. Utilisation du dispositif selon la revendication 4 pour une machine à imprimer, les objets à assembler étant une pile auxiliaire (25) et une nouvelle pile de papier (27) auxquelles sont associés les organes de commande qui peuvent modifier les positions latérales des piles (25, 27) l'une par rapport à l'autre et en ce que le signal de différence de distances (17, 18) commande les deux organes de commande au moyen d'un module de commande (29) jusqu'à la réunion des deux piles (25, 27) de manière que la surface inférieure de la pile auxiliaire (25) coïncide avec la surface supérieure de la nouvelle pile de papier (27).
